# EUROPÄISCHE PATENTANMELDUNG

(11) **EP 1 363 029 A1**
(43) Veröffentlichungstag der Anmeldung: **19.11.2003**
(21) Anmeldenummer: 03010548.0
(22) Anmeldetag: 11.05.2003
(51) Int. Cl.: F16B 2/16, F16B 21/16, B60N 2/46, B60N 2/015

(54) **Verbindungspaarung**

(30) Priorität: 13.05.2002 DE 10221251
(71) Anmelder: WSM Montagetechnik GmbH, 97900 Külsheim (DE)
(72) Erfinder: Behrmann, Wolfgang, 32425 Minden (DE)
(74) Vertreter: Thürer, Andreas

(57) **Zusammenfassung**

Um eine Verbindungspaarung mit einem Halteelement (1) und einem Aufnahmeelement (19) so auszugestalten, dass auch bei einer großen Fertigungstoleranz einen sicheren Halt der Verbindung gewährleistet ist, wird vorgeschlagen, dass das Halteelement (1) bezüglich einer Ringnut axial formschlüssig und drehbar In dem Aufnahmeelement (19) gehaltert ist und in einer Entnahmestellung zumindest ein Teil der Kugeln (4) von der äußeren Radiallage in eine radiale Innenlage übergehen, in der der Formschluss aufzuheben ist und das Halteelement (1) aus dem Aufnahmeelement (19) zu entnehmen ist.

## Beschreibung

Die Erfindung betrifft eine Verbindungspaarung mit einem Halteelement und einem Aufnahmeelement.

Lösbare Verbindungspaarungen, die drehbar sind, weisen häufig ein großes Spiel auf und sind somit nicht fest zu arretieren. Um dieses Spiel auf ein Minimum zu reduzieren, müssen große Anstrengungen bezüglich der Fertigungstoleranz unternommen werden.

Aufgabe der vorliegenden Erfindung ist es daher, eine Verbindungspaarung bereitzustellen, die auch bei einer großen Fertigungstoleranz einen sicheren Halt der Verbindung gewährleistet.

Die Aufgabe wird gelöst durch eine Verbindungspaarung mit einem Halteelement, insbesondere einem Halteelement einer Armlehne, und einem Aufnahmeelement, insbesondere einem Aufnahmeelements eines Sitzes, wobei das Halteelement mehrere Kugeln, und das Aufnahmeelement eine an die Kugeln angepasste Ringnut aufweist, wobei in einer Arretierstellung des Halteelements die Kugeln in eine radiale Aussenlage gezwungen sind, in der sie teilweise über die Aussenkontur des Halteelements hervorragen und in die Ringnut des Aufnahmeelements eingreifen, so dass das Halteelement bezüglich der Ringnut axial formschlüssig und drehbar in dem Aufnahmeelement gehaltert ist und in einer Entnahmestellung zumindest ein Teil der Kugeln von der radialen Aussenlage in eine radiale Innenlage übergehen, in der der Formschluss aufzuheben ist und das Halteelement aus dem Aufnahmeelement zu entnehmen ist.

Durch diese Verbindungspaarung ist eine flexible und sichere Anpassung des Halteelements an das Aufnahmeelement gewährleistet ohne hohe Anforderungen an die Fertigungstoleranzen. Die Verbindung ist darüber hinaus einfach zu lösen und wiederherzustellen.

Vorteilhaft ist es, wenn die radiale Aussenlage der Kugeln durch ein verlagerbares geometrisch-mechanisches Verdrängungselement im Halteelement herzustellen ist, das einen in Verlagerungsrichtung sich ändernden Querschnitt aufweist. Das geometrische Element gewährleistet eine sichere Funktion ohne aufwendige Hebelmechanismen. Es ist zudem mit geringem Aufwand herzustellen.

Besonders wirkungsvoll und sicher ist es, wenn das Verdrängungselement eine die Kugeln kontaktierende Betätigungsstange ist, die im Bereich der Kugeln einen Verdrängungskonus aufweist.

Der Ausgleich hoher Fertigungstoleranzen ist möglich, wenn die Kugeln an der Betätigungsstange durch eine Vorspannung spielfrei gehalten sind.

Ein wartungsarmer Aufbau des Halteelements ist gegeben, wenn die Vorspannung durch eine Druckfeder herzustellen ist.

Vorteilhaft ist die Betätigungsstange durch einen im Halteelement vorgesehenen Betätigungsknopf zu verschieben. Somit liegt eine einfache und zuverlässige Bedienbarkeit der Verbindungspaarung vor.

Wenn die Aussenkontur des Halteelements und die Innenkontur des Aufnahmeelements Im wesentlichen kreiszylindrisch sind, ist das Halteelement einfach zu drehen und einzupassen. Zudem ist die Ringnut mit geringem Aufwand im Aufnahmezylinder anzubringen.

Eine Verwendung der Verbindungspaarung als Armlehnenhalterung ist möglich, wenn eine feste Verbindung des Aufnahmeelements mit einem Sitz vorliegt. Dann kann des Halteelement, das fest mit der Armlehne verbunden ist, in das Aufnahmeelement eingesetzt werden.

Eine Drehbremse für das Halteelement kann dadurch erreicht werden, dass an der Aussenkontur des Halteelements eine Kulissenfolge-Nase oder -Nocken und am Aufnahmezylinder eine korrespondierende Kulissenbahn vorgesehen ist. Durch den Lauf des Nockens auf der enger werdenden Kulisse wird die Drehbewegung des Halteelements zunehmend gebremst.

Eine Einrichtung eines Stops für die Drehung des Halteelement ist möglich, wenn am Aufnahmezylinder eine Führung mit Endanschlag vorgesehen ist.

Für den Fall, dass eine der Kugeln beim Verschieben der Betätigungsstange nicht in den Innenraum des Halteelements zurückfällt, ist es zur Gewährleistung der Funktion der Verbindungspaarung vorteilhaft, wenn eine in der Ringnut endende Entnahmenut vorgesehen ist, durch die eine in radialer Aussenlage verbleibende Kugel des Halteelements aus dem Kontakt mit dem Aufnahmeelement zu entfernen ist.

Um eine sichere Hin- und Herbewegung der Kugeln beim Betätigen der Betätigungsstange zu erreichen, wird vorgeschlagen, dass ein sich umfangsmäßig verjüngender Führungssteg für die Kugeln zur Öffnung im Halteelement führt.

Die Erfindung wird nachfolgend anhand von Ausführungsbeispielen und Zeichnungen näher erläutert.

Es zeigen
Fig. 1 einen Längsschnitt durch eine Halteelement einer erfindungsgemäßen Vorrichtung
Fig. 2 einen Längsschnitt durch eine Aufnahmeelement,
Fig. 3 einen Längsschnitt durch ein Aufnahmeelement und
Fig. 4 eine Seitenansicht auf ein Aufnahmeelement.

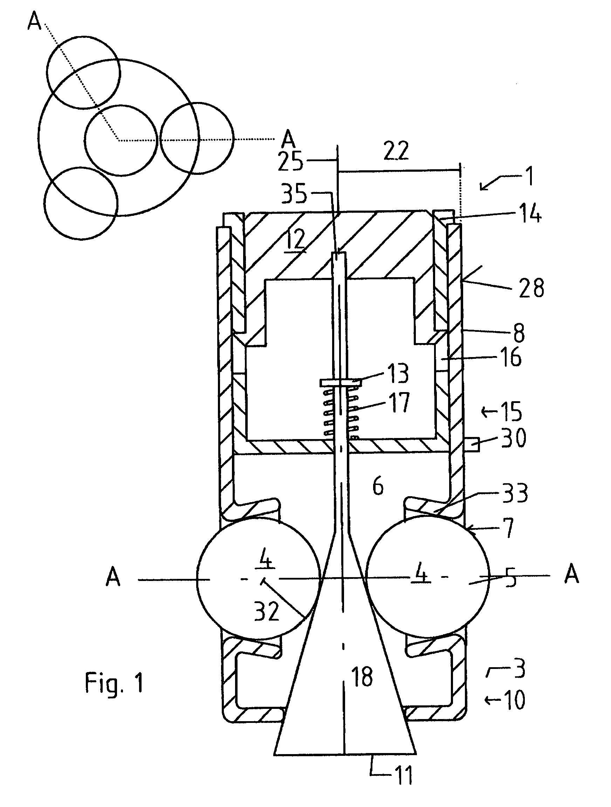

Fig. 1 zeigt ein erfindungsgemäßes Halteelement 1, das ein Gehäuse 2 aufweist, das ein Einsatzende 3 mit drei Kugeln 4 hat, von denen zwei sichtbar dargestellt sind. Ein Umfangsabschnitt 5 der Kugeln 4 mit einem Radius 32, die im Innenraum 6 des Gehäuses 2 untergebracht sind, steht radial nach aussen an dafür vorgesehenen Öffnungen 7 über den Gehäuseumfang 8 hervor. Die Öffnungen 7 sind rund ausgebildet und weisen Führungsstege 33 auf, um den Kugeln 4 ein ungestörtes Drehen zu ermöglichen. Vom oberen Ende 9 bis zum unteren Ende 10 des Gehäuses 2 ragt eine Betätigungsstange 11 zwischen den Kugeln 4 hindurch. Im oberen Ende 9 des Gehäuses 2 befindet sich ein Betätigungsknopf 12, der das obere Ende 13 der Betätigungsstange 11 umfasst. Der Betätigungsknopf 12 stützt sich gegen das Gehäuse 2 über einen Innenzylinder 14 ab. Ebenfalls am Innenzylinder 14, der in einem mittleren Bereich 15 des zylinderförmigen Gehäuses 2 in Form eines Zylinderbodens mit Bodenloch für die Betätigungsstange 11 endet, stützt sich eine um die Betätigungsstange angeordnete Druckfeder 17 ab, die durch einen Federanschlag 13 an der Betätigungsstange 11 gegenüber dem Innenzylinder 14, der fest mit dem Gehäuse 2 verbunden ist, gespannt ist. Der Druckknopf 12 umgreift den Innenzylinder 14 am oberen Ende 35 in einer für die Bewegung des Druckknopfes 12 vorgesehenen Führungsaussparung 16. Die Betätigungsstange 11 ist an ihrem sich zwischen den Kugeln 4 befindenden Endabschnitt 18 zum äusseren Ende 10 hin sich im Querschnitt konisch vergrößernd ausgebildet. Die Differenz des Durchmessers der Betätigungsstange 11 beträgt zu Beginn des Konus gegenüber der Stelle, an der die Kugeln 4 in ihrer radialen Aussenlage am Konus anliegen, nahezu so viel, wie der Betrag um den die Kugeln 4 aus den Öffnungen 7 nach aussen aus dem Halteelement 1 hervorstehen. Dann ist es sicher gewährleistet, das die Kugeln beim Betätigen der Betätigungsstange 11 ausreichend weit in den Innenraum 6 des Halteelements 1 zurückrollen können, um ein Herausnehmen des Halteelements 1 zu ermöglichen.

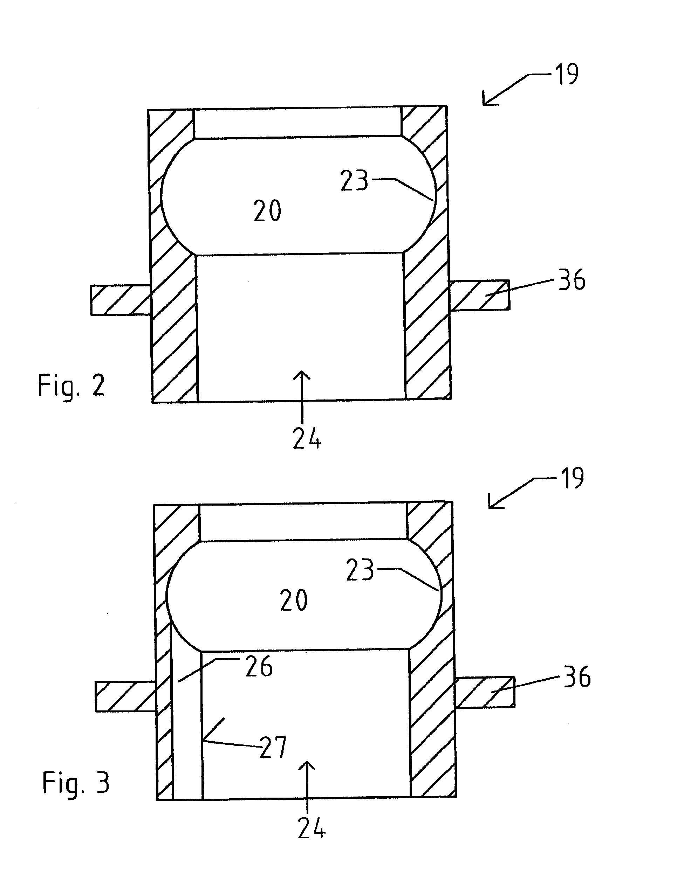

Fig. 2 zeigt einen Längsschnitt durch ein Aufnahmeelement 19 mit Kugelbahn 23. Mit dem Einsatzende 3 wird das Halteelement 1 zum Herstellen der Verbindung in ein Aufnahmeelement 19, das im Querschnitt beispielhaft in Fig. 2 und Fig. 3 dargestellt ist, gesteckt. Das Aufnahmeelement 19 weist einen Aufnahmezylinder 20 auf, dessen Radius 21 an den Umfangsradius 22 des Gehäuses 2 des Halteelements 1 angepasst ist. In dem Aufnahmezylinder 20 ist eine Ringnut in Form einer an den Kugelradius 32 angepassten Kugelbahn 23 vorgesehen. Beim Einsetzen des Halteelements 1 in den Aufnahmezylinder 20 in Einsatzrichtung 24 werden die Kugeln 4 zunächst gegen die Federkraft der Druckfeder 17, die an der Betätigungsstange 11 anliegt, nach innen in einen freien Innenraum 6 das Gehäuse 2 des Halteelements 1 gedrückt und können sich dann beim Einschieben in das Aufnahmeelement 19 beim Erreichen der Lage der Kugelbahn 23 wieder nach aussen bewegen. Somit ist das Halteelement 1 gegen ein Herausfallen aus dem Aufnahmeelement 19 gesichert.

Zum Lösen des Halteelements 1 wird der Betätigungsknopf 12 nach unten gedrückt. Auf diese Weise wird die Betätigungsstange 11 gegen den Druck der Druckfeder 17 ebenfalls nach unten gedrückt. Da sich am Einsatzende 10 der Betätigungsstange 11 der Endabschnitt 18 mit der konusförmigen Erweiterung befindet, die die Kugeln 4 nach aussen drückt, wird durch das Herunterdrücken ein Bereich der Betätigungsstange 11 mit den Kugeln 4 in Kontakt gebracht, der einen geringeren Durchmesser aufweist. Somit können die Kugeln 4 sich nach innen in den Innenraum 6 des Halteelements 1 bewegen und stehen nicht mehr über den Umfangsradius 22 des Gehäuses 2 des Halteelements 1 hervor. Somit bildet die Kugelbahn 23 keinen formschlüssigen Widerstand mehr gegen ein Herausziehen des Halteelements 1.

Falls das Aufnahmeelement 19 gegenüber der Erde schräg gelagert ist, ist es möglich und sogar erwünscht, das eine der Kugeln 4, die sich gerade am erdnächsten befindet, durch das Niederdrücken der Betätigungsstange 11 durch Schwerkrafteinwirkung nicht in einen Innenraum 6 des Halteelements 1 befördert werden kann, sondern in der Kugelbahn 23 verbleibt. Dies kann dadurch behoben werden, dass die letzte verbleibende Kugel 4 durch ein Drehen des Halteelements 1 um die Längsachse 25 in eine in die Kugelbahn 23 mündende, längs des Aufnahmeelements 19 verlaufende Entnahmenut 26, dargestellt in Fig.3, in der Innenfläche 27 des Aufnahmezylinders 20 befördert wird. Mittels dieser Entnahmenut 26 kann dann auch das Halteelement 1 mitsamt dieser noch überstehenden Kugel 4 aus dem Aufnahmeelement 19 entfernt werden. Erwünscht ist diese Funktion als Sicherungsfunktion gegen ein unbeabsichtigtes Herausnehmen des Halteelements 1 beispielsweise bei Verwendung des Halteelements 1 zur Befestigung einer Armlehne an einem Fahrzeugsitz. Die Armlehne wird dabei am Halteelementgehäuse 2 befestigt und dann in das in den Sitz mittels des Sicherungsrandes 36 gehaltene flanschartige Aufnahmeelement 19 eingesetzt. Die Armlehne kann dann mit Hilfe des drehbaren Halteelements 1 verschwenkt werden. Vorteilhaft sind dabei insbesondere die Rastpositionen in an den Fahrzeugsitz angepassten Winkelstellungen. Die Montage der Armlehne kann auf diese Weise effektiv und die Bedienung spielfrei erfolgen.

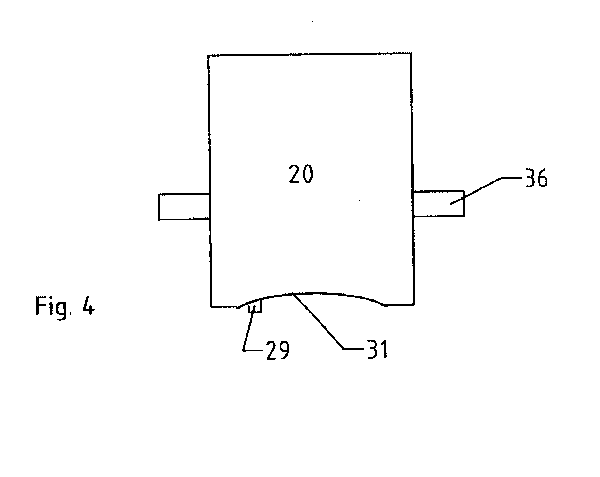

Das Halteelement 1 kann durch in der Innenfläche 27 oder einer Kopffläche 34 des Aufnahmezylinders 20 oder der Aussenfläche 28 des Gehäuses 2 angeformte Anschläge 29, Fig. 4, sowie korrespondierend angebrachte Nocken 30 zu beliebigen Stopps beim Drehen gezwungen werden. Auf diese Weise können bestimmte Stellungen als bevorzugte Stellungen markiert und festgelegt werden. Eine weitere Variante ist eine Ausgestaltung der Kopffläche 34 des Aufnahmezylinders 20 als Kulisse 31. Auf diese Weise wird ein der Steigung der Kulisse 34 entsprechender langsamer Stop beim Drehen des Halteelements 1 erreicht. Weiterhin kann eine Rastung in der Kopffläche 34 des Aufnahmezylinders 20 angebracht werden, die mit korrespondierenden Elementen am Gehäuse 2 des Halteelements 1 übereinstimmend angebracht ist, so dass eine stufenweise Einstellung des Halteelements 1 möglich ist. Zudem können so individuell vorgegebene Auslösekräfte realisiert werden.

### BEZUGSZEICHENLISTE

- 1: Halteelement
- 2: Gehäuse
- 3: Einsatzende
- 4: Kugel
- 5: Umfangsabschnitt
- 6: Innenraum
- 7: Öffnung
- 8: Gehäuseumfang
- 9: oberes Ende
- 10: Einsatzende
- 11: Betätigungsstange
- 12: Betätigungsknopf
- 13: Federanschlag
- 14: Innenzylinder
- 15: mittlerer Bereich
- 16: Führungsaussparung
- 17: Druckfeder
- 18: Endabschnitt
- 19: Aufnahmeelement
- 20: Aufnahmezylinder
- 21: Radius
- 22: Umfangsradius
- 23: Kugelbahn
- 24: Einsatzrichtung
- 25: Längsachse
- 26: Entnahmenut
- 27: Innenfläche
- 28: Aussenfläche
- 29: Anschlag
- 30: Nocken
- 31: Kulisse
- 32: Kugelradius
- 33: Führungssteg
- 34: Kopffläche
- 35: oberes Ende
- 36: Sicherungsrand

## Patentansprüche

1. Verbindungspaarung mit einem Halteelement (1), insbesondere einem Halteelement einer Armlehne, und einem Aufnahmeelement (19), insbesondere einem Aufnahmeelement eines Sitzes, wobei das Halteelement (1) mehrere Kugeln (4), und das Aufnahmeelement (19) eine an die Kugeln (4) angepasste Ringnut aufweist, wobei in einer Arretierstellung des Halteelements (1) die Kugeln (4) in eine radiale Aussenlage gezwungen sind, in der sie teilweise über die Aussenkontur des Halteelements (1) hervorragen und in die Ringnut des Aufnahmeelements (19) eingreifen, so dass das Halteelement (1) bezüglich der Ringnut axial formschlüssig und drehbar in dem Aufnahmeelement (19) gehaltert ist und in einer Entnahmestellung zumindest ein Teil der Kugeln (4) von der radialen Aussenlage in eine radiale Innenlage übergehen, in der der Formschluss aufzuheben ist und das Halteelement (1) aus dem Aufnahmeelement (19) zu entnehmen ist.

2. Verbindungspaarung nach Anspruch 1, **dadurch gekennzeichnet, dass** die radiale Aussenlage der Kugeln (4) durch ein verlagerbares geometrisch-mechanisches Verdrängungselement im Halteelement (1) herzustellen ist, das einen in Verlagerungsrichtung sich ändernden Querschnitt aufweist.

3. Verbindungspaarung nach Anspruch 1 oder 2, **dadurch gekennzeichnet, dass** das Verdrängungselement eine die Kugeln (4) kontaktierende Betätigungsstange (11) ist, die im Bereich der Kugeln (4) einen Verdrängungskonus aufweist.

4. Verbindungspaarung nach einem der Ansprüche 1 bis 3, **dadurch gekennzeichnet, dass** die Kugeln (4) an der Betätigungsstange (11) durch eine Vorspannung spielfrei gehalten sind.

5. Verbindungspaarung nach einem der Ansprüche 1 bis 4, **dadurch gekennzeichnet, dass** die Vorspannung durch eine Druckfeder (17) herzustellen ist.

6. Verbindungspaarung nach einem der Ansprüche 1 bis 5, **dadurch gekennzeichnet, dass** die Betätigungsstange (11) durch einen im Halteelement (1) vorgesehenen Betätigungsknopf (12) zu verschieben ist.

7. Verbindungspaarung nach einem der Ansprüche 1 bis 6, **dadurch gekennzeichnet, dass** die Aussenkontur des Halteelements (1) und die Innenkontur des Aufnahmeelements (19) im wesentlichen kreiszylindrisch sind.

8. Verbindungspaarung nach einem der Ansprüche 1 bis 7, **dadurch gekennzeichnet, dass** eine feste Verbindung des Aufnahmeelements (1) mit einem Sitz vorliegt.

9. Verbindungspaarung nach einem der Ansprüche 1 bis 8, **dadurch gekennzeichnet, dass** an der Aussenkontur des Halteelements (1) eine Kulissenfolge-Nase oder -Nocken (30) und am Aufnahmezylinder (20) eine korrespondierende Kulissenbahn vorgesehen ist.

10. Verbindungspaarung nach einem der Ansprüche 1 bis 9, **dadurch gekennzeichnet, dass** am Aufnahmezylinder (20) eine Führung mit Endanschlag vorgesehen ist

11. Verbindungspaarung nach einem der Ansprüche 1 bis 10, **dadurch gekennzeichnet, dass** eine in der Ringnut endende Entnahmenut (26) vorgesehen ist, durch die eine in radialer Aussenlage verbleibende Kugel (4) des Halteelements (1) aus dem Kontakt mit dem Aufnahmeelement (19) zu entfernen ist.

12. Verbindungspaarung nach einem der Ansprüche 1 bis 11, **dadurch gekennzeichnet, dass** ein sich umfangsmäßig verjüngender Führungssteg (33) für die Kugeln (4) zur Öffnung im Halteelement (1) führt.
